# EUROPEAN PATENT SPECIFICATION

(11) **EP 4 333 609 B1**
(45) Date of publication and mention of the grant of the patent: **25.06.2025**
(21) Application number: 22722355.9
(22) Date of filing: 02.05.2022
(51) Int. Cl.: A23C 19/068, A01J 25/00, A01J 25/12, A01J 27/04, A23C 19/09

(54) **EQUIPMENT FOR THE PRODUCTION OF STUFFED CHEESE, PARTICULARLY BURRATA CHEESE**
VORRICHTUNG ZUR HERSTELLUNG VON GEFÜLLTEM KÄSE, INSBESONDERE BRATA-KÄSE
ÉQUIPEMENT POUR LA PRODUCTION DE FROMAGE FARCI, EN PARTICULIER DU FROMAGE DE TYPE BURRATA

(30) Priority: 07.05.2021 IT 202100011762
(43) Date of publication of application: 13.03.2024
(73) Proprietor: Marotta Evolution S.r.l., 40033 Casalecchio di Reno (BO) (IT)
(72) Inventor: MAROTTA, Carmine, 40033 Casalecchio di Reno (BO) (IT)
(74) Representative: Luppi, Emanuele
(86) International application number: PCT/IB2022/054024
(87) International publication number: WO 2022/234423

(56) References cited:
- EP-A2- 0 713 649
- IT-A1- 201800 001 009

## Description

### Technical Field

The present invention relates to a piece of equipment for the production of stuffed cheese, particularly burrata cheese.

### Background Art

Burrata cheese is a fresh *pasta filata* cheese, usually in the shape of a bag, containing a stuffing made up of fragments of fresh cheese and cream, also known as stracciatella.

The production process of the burrata cheese is manual and involves the initial hot processing of the *pasta filata* cheese in order to obtain a substantially spheroidal fresh cheese, known as mozzarella.

The mozzarella cheese is then retained, through a small portion, by an operator who inserts an injector for the delivery of the stuffing inside the mozzarella itself.

During delivery, the mozzarella cheese deforms to make room for the stuffing and acquires the characteristic bag shape.

After this operation has been completed, the operator seals the portion by applying a pressure force thereto; through this operation, the portion can be eventually removed from the burrata cheese depending on the shape to be given thereto.

Finally, the burrata cheese thus obtained is cooled and packaged.

It is easy to understand that this process is particularly labor-intensive and requires the use of skilled labor, since the operations must be carried out precisely and accurately to prevent the "bag" from spoiling, thus affecting the processing.

This inevitably leads to high production costs and consequently high prices for the final consumer.

In addition, the process involves rather long processing times which can affect the quality of fresh cheeses which, in order to maintain their quality almost unchanged, need to be placed on the market within a short time from their production.

Furthermore, the risk of contamination associated with the manual processing of these fresh cheeses should not be underestimated, which may, in turn, affect the quality of the finished product.

It is important to point out that changes in the quality of these fresh cheeses affect significantly customer's satisfaction, who may be discouraged to repeat the purchase of the product.

It is clear, therefore, that the production process of this stuffed cheese is open to improvement.

EP0713649A2 discloses an equipment for the production of stuffed cheese according to the preamble of claim 1.

### Description of the Invention

The main aim of the present invention is to devise a piece of equipment for the production of stuffed cheese, particularly burrata cheese, that allows reducing the processing time and costs related thereto.

Another object of the present invention is to devise a piece of equipment for the production of stuffed cheese, particularly burrata cheese, that allows freeing from the use of skilled labor.

A further object of the present invention is to devise a piece of equipment for the production of stuffed cheese, particularly burrata cheese, that allows minimizing the risk of bacterial contamination.

Another object of the present invention is to devise a piece of equipment for the production of stuffed cheese, particularly burrata cheese, that allows overcoming the aforementioned drawbacks of the prior art within a simple, rational, easy, effective to use and affordable solution.

The objects set out above are achieved by the present equipment for the production of stuffed cheese, particularly burrata cheese, having the characteristics of claim 1.

### Brief Description of the Drawings

Other characteristics and advantages of the present invention will be more evident from the description of a preferred, but not exclusive, embodiment of a piece of equipment for the production of stuffed cheese, particularly burrata cheese, illustrated by way of an indicative, yet non-limiting example in the attached tables of drawings in which:
Figure 1 is an axonometric view of a first embodiment of the equipment according to the invention;
Figure 2 is a detailed axonometric view of the equipment in Figure 1;
Figure 3 is an exploded view of a component of the equipment according to the invention;
Figures 4-8 are schematic representations of the equipment according to the invention in different configurations of use;
Figure 9 is an axonometric view of a second embodiment of the equipment according to the invention;
Figure 10 is an axonometric detailed view of the equipment in Figure 9;
Figure 11 is an axonometric view of the equipment in Figure 9, from a different angle;
Figure 12 is a detailed side view of the equipment in Figure 9;
Figures 13 and 14 are axonometric detailed views of the equipment in Figure 9.

### Embodiments of the Invention

With particular reference to these figures, reference numeral 1 globally indicates a piece of equipment for the production of stuffed cheese, particularly burrata cheese.

The equipment 1 according to the invention comprises at least one base frame 2 and supporting means 3 for at least one cheese C of the "pasta filata" type, which are associated with the base frame 2.

In particular, the cheese C is of the mozzarella type.

The possibility of using a different type of "pasta filata" cheese, e.g. scamorza, cannot however be ruled out.

The cheese C undergoes hot processing to allow the introduction of a stuffing to obtain a stuffed cheese S, in this case a burrata cheese.

In particular, the stuffing comprises one or more fresh dairy products, specifically, fragments of mozzarella and cream.

The use of different types of dairy products (e.g. cottage cheese, butter, gorgonzola cheese, etc.) and/or with added non-dairy ingredients (truffle, olives, ham, vegetables, etc.) cannot however be ruled out for the production of different types of stuffed cheese S.

For this purpose, the equipment 1 also comprises:
- gripping means 6 of the cheese C associated with the base frame 2 and adapted to retain at least one portion P of the cheese C; and
- filling means 7 of the cheese C associated with the base frame 2 and adapted to inject a stuffing inside the cheese C through the portion P to obtain a stuffed cheese S.

Furthermore, the equipment 1 comprises movement means 20, 21 adapted to move at least one of either the supporting means 3, the gripping means 6 or the filling means 7.

The movement means 20, 21 are adapted to mutually move the supporting means 3, the gripping means 6 and the filling means 7 during the different operational phases.

The gripping means 6, the filling means 7 and the movement means 20, 21 will be described in more detail later in the present disclosure.

The supporting means 3 comprise at least a first container element 51 defining a first housing 51a adapted to contain the cheese C and at least a second container element 52 defining a second housing 52a adapted to contain the stuffed cheese S.

In this case, each of the container elements 51, 52 is of the type of a cup and is provided with the relevant housing 51a, 52a and with a relevant stem 5b which helps to space the housing itself apart from the supporting plane 4.

The housings 51a, 52a have a substantially sphere portion conformation.

Each of the housings 51a, 52a has a relevant radius of curvature and according to the invention the radius of curvature of the second housing 52a is greater than the radius of curvature of the first housing 51a.

More in detail, the housings 51a, 52a are shaped in such a way as to accommodate at least partly and to size the respective cheeses C, S. The first housing 51a, intended to accommodate the cheese C, has therefore a smaller surface area than the second housing 52a, which is intended to accommodate the stuffed cheese S. During filling, in fact, the cheese C tends to deform to make room for the stuffing, thus increasing in volume.

In this way, the equipment 1 allows avoiding a possible flattening/collapse of the cheese C, caused by a too wide radius of curvature in the housing, which would make the subsequent gripping and filling operations more complex. At the same time, the equipment 1 allows avoiding a possible bottleneck of the bottom of the stuffed cheese S, caused by a too narrow radius of curvature in the housing, which could jeopardize the aesthetic appearance of the stuffed cheese itself.

It should, in fact, be underlined that the production of the cheese C and of the stuffed cheese S is done at high temperature and the pasta filata which makes them is easily deformable.

Thus, the equipment 1 allows both the cheese C and the stuffed cheese S to maintain a substantially spherical shape throughout the entire working process. The container element 51, 52 can be made of thermally insulating material, so as to maintain the temperature of the cheese C, which needs to be worked at high temperatures.

Alternatively, the container element 51, 52 may be made of a metal material, characterized by minimal thermal resistance and capable of rapidly reaching the temperature of the cheese C.

The supporting means 3 conveniently comprise a supporting plane 4 of the container elements 51, 52 which is movable on the base frame 2 along a direction of forward movement D.

In the embodiment shown in the figures, the supporting plane 4 is of the type of a conveyor belt and the direction of forward movement D is substantially linear. It cannot however be ruled out that the supporting plane 4 may be of the type of a rotary carousel with a substantially circular direction of forward movement D. Other embodiments wherein the supporting plane 4 is stationary cannot be ruled out.

With reference to the embodiment shown in the figures, the movement of the supporting plane 4 is of the discrete type and allows the container elements 51, 52 to be positioned between different operational stations.

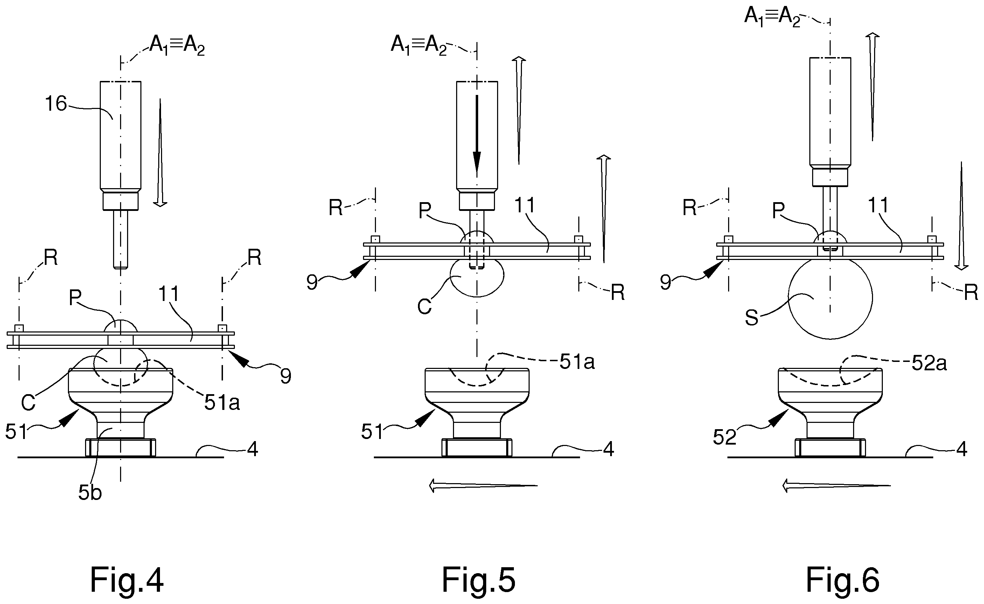

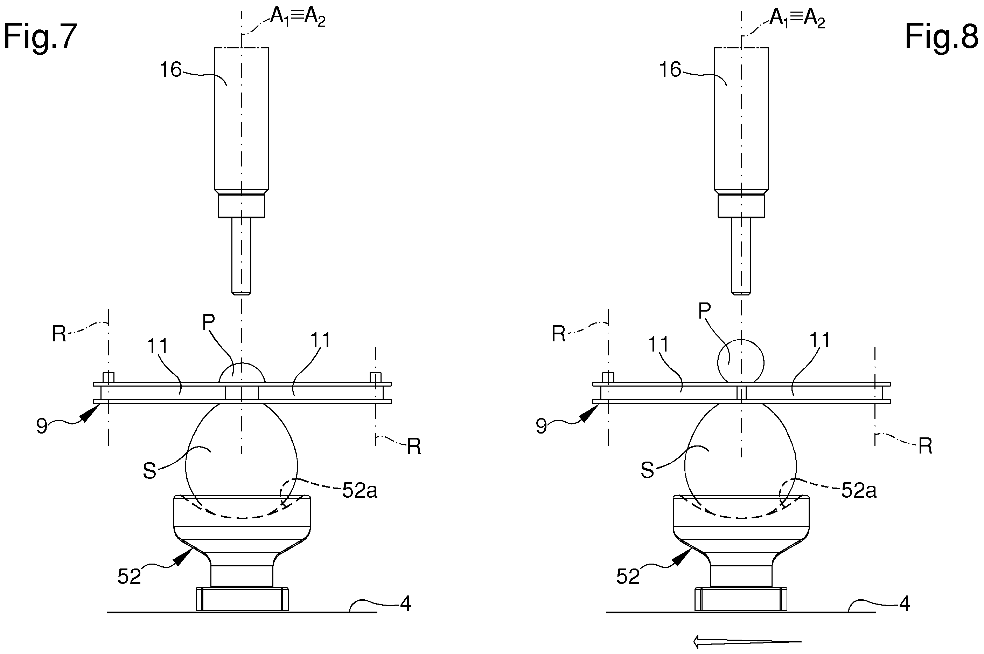

More specifically, the supporting plane 4 is movable along the direction of forward movement D in order to position the container elements 51, 52 between:
- a loading station, wherein the first container element 51 receives the cheese C;
- a filling station, wherein the first container element 51 is arranged at the point where the gripping means 6 are located and the gripping means 6 retain the portion P (Figures 4 and 5);
- a receiving station, wherein the second container element 52 is arranged at the point where the gripping means 6 are located and the gripping means 6 release the stuffed cheese S into the second container element 52 (Figures 6, 7 and 8); and
- an unloading station, wherein the second container element 52 releases the stuffed cheese S.

Specifically, at the loading station, the cheese C is positioned inside the first housing 51a of the first container element 51.

At the filling station, the gripping means 6 retain the portion P and the filling means 7 of the cheese C are fitted inside the cheese C, through the portion P, to inject the stuffing inside the cheese C to obtain the stuffed cheese S.

During this operation, the cheese C is moved away from the first housing 51a in order to allow it to be filled and the resulting expansion of the pasta filata. The supporting plane 4 is moved to bring the second container element 52 into the receiving station so as to receive the freshly prepared stuffed cheese S.

Usefully, the supporting means 3 comprise at least one row of container elements F comprising a plurality of first container elements 51 and a plurality of second container elements 52 associated with the supporting plane 4 and arranged alternately in sequence along the direction of forward movement D.

In more detail, the container elements 51, 52 are arranged on the supporting plane 4 at defined distances, in such a way that when a container element 51, 52 is in the unloading station, there is a subsequent one arranged at the filling station.

This embodiment allows producing stuffed cheese S in a continuous cycle and without the need for the second container element 52 to unload the stuffed cheese S before starting a new cycle.

As anticipated above, the equipment 1 comprises gripping means 6 adapted to retain the cheese C and, after filling, the stuffed cheese S.

The gripping means 6 comprise at least one gripping frame 8 associated with the base frame 2 and at least one diaphragm device 9, associated with the gripping frame 8 and closable around the cheese C to retain the portion P and openable to release the stuffed cheese S.

In particular, the diaphragm device 9 defines a passage hole 10 through which the cheese C can pass.

The closure of the diaphragm device 9 causes a gradual closure of the passage hole 10 until the cheese C is intercepted.

Advantageously, the diaphragm device 9 comprises a plurality of gripping elements 11 associated with the gripping frame 8, arranged along a circumference.

Specifically, the gripping elements 11 are arranged to surround the passage hole 10 and are mutually movable in rotation around their respective axes of rotation R between at least one working position, wherein they are approached to the centre of the circumference to intercept the cheese C and retain the portion P, and at least one home position, wherein they are moved away from the centre to release the cheese C.

In other words, the gripping elements 11 move at the same time in a concentric manner to intercept the portion P and keep the cheese C stationary.

In addition, the diaphragm device 9 is provided with rotational means 12 of the gripping elements 11 between at least the working position and the home position, comprising at least one connecting element 13 associated with the gripping elements 11.

The connecting element 13 has a substantially circular shape, is arranged on top of the gripping elements 11 and comprises a plurality of slots 13a, arranged along the circumference, each associated with a corresponding pin 11a defined on a respective gripping element 11.

In more detail, the pin 11a is accommodated in a sliding manner inside the slot 13a, the shape of which determines the movement trajectory of the pin 11a and thus the amplitude of rotation of the gripping element 11 around the respective axis of rotation R.

The rotational means 12 comprises at least one actuating body 14 operationally connected to the connecting element 13 by means of a gear wheel 14a adapted to mesh on a respective toothed portion 13b defined on the connecting element itself.

The rotation of the gear wheel 14a in the two directions of rotation determines the movement of the gripping elements 11 between the working position and the home position.

Specifically, the rotation of the connecting element 13 determines the displacement of the slots 13a which in turn drive the respective pins 11a and transfer the movement to the gripping elements 11.

In addition, the gripping elements 11 can be conveniently moved towards a sealing position wherein the passage hole 10 is further closed and wherein the gripping elements 11 apply a pressure force on the portion P in order to firmly close the stuffed cheese S.

At the end of this operation, the stuffed cheese S has a sealing area that divides the portion P from the stuffed part below.

The gripping elements 11 can also be moved further towards a cutting position wherein the passage hole 10 is completely closed; in the cutting position, the gripping elements 11 determine the detachment of the portion P from the stuffed cheese S.

The equipment 1 allows, in actual facts, the production of stuffed cheese S provided with the characteristic "bag" shape and/or stuffed cheese S having a spheroidal shape, wherein the portion P is removed from the stuffed cheese S.

After detachment, the portion P remains on the diaphragm device 9 until the next movement of the gripping elements 11 towards the home position, wherein it is deposited on the supporting plane 4 by gravity.

Conveniently, the equipment 1 may comprise a plurality of diaphragm devices 9, arranged in a concentric manner and independently operable depending on the type of stuffed cheese S to be obtained.

For example, on the basis of the size of the stuffed cheese S to be obtained, two identical diaphragm devices 9 arranged on top of each other may be used; in the case of the production of a small stuffed cheese S, only one diaphragm device 9 is operated in order to retain a reduced portion P; whereas, for the production of a larger stuffed cheese S, it will be necessary to retain a larger portion P and both the diaphragm devices 9 will be operated at the same time.

Alternatively or in combination therewith, one of the diaphragm devices 9 may comprise gripping elements 11 provided with a sharp portion adapted to easily remove the portion P after filling the cheese C; in such a case, the equipment 1 comprises at least one diaphragm device 9 adapted to seal the portion P and at least one diaphragm device 9 adapted to remove it.

Alternatively or in combination with the diaphragm device 9, the gripping means 6 may comprise a gripper device associated with the gripping frame 8 and movable to retain and/or seal the cheese C and/or to remove the portion P from the stuffed cheese S.

As mentioned above, the equipment 1 comprises filling means 7 adapted to inject the stuffing into the cheese C.

The filling means 7 comprise at least one filling frame 15 associated with the base frame 2 and at least one injector device 16 associated with the filling frame 15 and adapted to inject the stuffing into the cheese C.

Conveniently, the equipment 1 also comprises at least one tank 17 adapted to contain the stuffing, which is connected in a fluid-operated manner to the injector device 16 and at least one pumping device 18 adapted to transfer the stuffing from the tank 17 to the injector device 16.

In more detail, the injector device 16 is partly inserted into the cheese C through the portion P, suitably retained by the gripping means 6, and delivers the stuffing, contained in the tank 17, into the cheese C.

As a result of filling, the injector device 16 is pulled out of the portion P to obtain the stuffed cheese S and the gripping means 6 seal and possibly remove the portion P.

The stuffed cheese S obtained this way is released from the gripping means 6 and transferred towards the unloading position; in particular, the gripping elements 11 are moved towards the home position to free the passage hole 10.

During this operation, any removed portion P is released on the supporting plane 4 to allow it to be moved away, together with the stuffed cheese S, from the stuffing station towards the unloading station.

The equipment 1 comprises at least one cooling tub 19a, 19b, located at the unloading station, inside which the stuffed cheese S is transferred.

In particular, as shown in the figures, at the unloading station, the supporting plane 4 causes the container elements 51, 52 to overturn, thus causing the stuffed cheese S to fall from the second container element 52 into the cooling tub 19a, 19b.

The cooling tub 19a, 19b comprises a first tub 19a adapted to contain the portions P and a second tub 19b adapted to contain the stuffed cheese S.

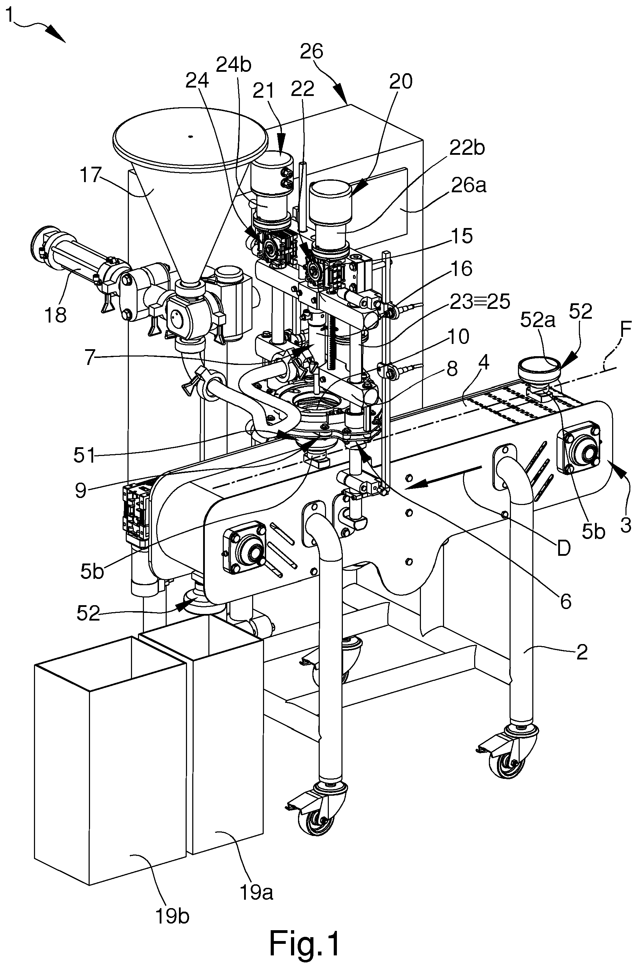

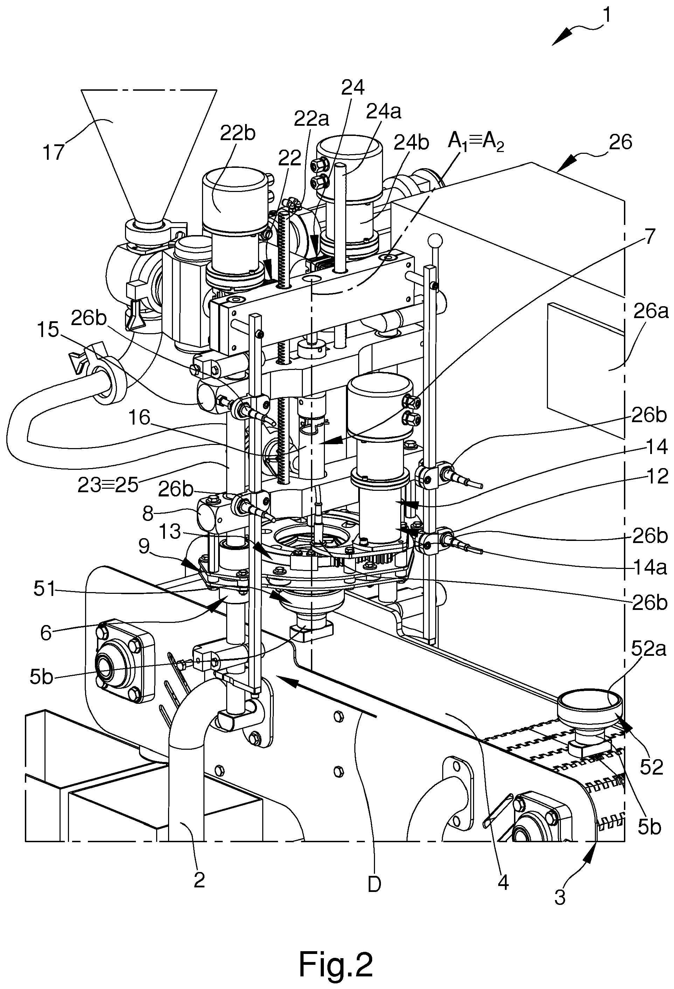

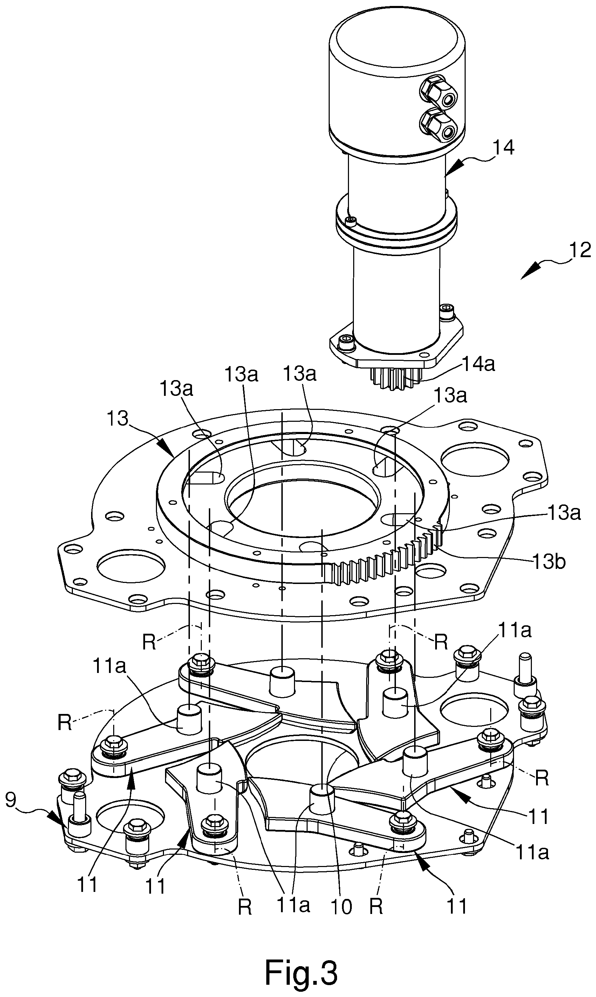

In the embodiment shown in Figures 1 to 8, the first tub 19a and the second tub 19b are aligned along the direction of forward movement D so that the first tub 19a is placed in the immediate vicinity of the supporting plane 4.

The special solution of providing container elements 51, 52 provided with the stem 5b allows, as a result of the movement of the supporting plane 4 at the unloading station, the portion P to fall into the first tub 19a and the stuffed cheese S to fall into the second tub 19b.

It cannot however be ruled out that the equipment 1 comprises an individual cooling tub and that the separation of the stuffed cheese S and the portions P is carried out at a later date.

As mentioned above, the equipment 1 comprises movement means 20, 21 adapted to move at least one of either the supporting means 3, the gripping means 6 or the filling means 7.

In particular, the movement means 20, 21 comprise at least one mutual movement unit 20 between the supporting means 3 and the gripping means 6, and at least one mutual movement assembly 21 between the gripping means 6 and the filling means 7.

The mutual movement unit 20 is adapted to move at least one of either the supporting means 3 or the gripping means 6 with respect to the other along an axis of travel A1 substantially perpendicular to the supporting plane 4.

In essence, the mutual movement unit 20 has the function of approaching or moving away the supporting means 3 to/from the gripping means 6 in order to allow retaining the cheese C by the diaphragm device 9.

In the embodiment shown in the figures, the mutual movement unit 20 is adapted to move the gripping means 6 with respect to the supporting means 3.

The mutual movement unit 20 also has the function of moving the diaphragm device 9 away from the first container element 51, by lifting the cheese C from the first housing 51a during filling by the filling means 7 and bringing it closer to the second container element 52 to rest the stuffed cheese S in the second housing 52a, at the end of the filling operation.

The mutual movement unit 20 comprises a driving unit 22 operationally connected to the gripping frame 8 and a guidance unit 23 associated with the base frame 2 and extending along the axis of travel A1.

The gripping frame 8 is associated with the guidance unit 23 in a sliding manner.

The driving unit 22 comprises a rack-and-pinion element 22a, associated with the gripping frame 8, substantially parallel to the guidance unit 23, and an actuating device 22b, of the type of an electric motor, connected to the rack-and-pinion element itself and adapted to move the gripping frame 8 on the guidance unit 23.

The mutual movement assembly 21 is adapted to move at least one of either the gripping means 6 or the filling means 7 with respect to the other along an axis of sliding A2 substantially perpendicular to the supporting plane 4.

In other words, the mutual movement assembly 21 has the function of bringing the filling means 7 and the gripping means 6 close to or further away from each other to allow the injector device 16 to be inserted into and removed from the portion P.

In the embodiment shown in the figures, the mutual movement assembly 21 is adapted to move the filling means 7 with respect to the gripping means 6.

The mutual movement assembly 21 also has the function of moving the injector device 16 with respect to the first container element 5 during filling, substantially at the same time as the gripping means 6, in order to facilitate the deformation of the cheese C.

The mutual movement assembly 21 comprises a motor assembly 24 operationally connected to the filling frame 15 and a guidance assembly 25 associated with the base frame 2 and extending along the axis of sliding A2.

The filling frame 15 is associated with the guidance assembly 25 in a sliding manner.

The motor assembly 24 comprises at least one rack-and-pinion body 24a, associated with the filling frame 15, which is substantially parallel to the guidance assembly 25, and an actuating element 24b, of the type of an electric motor, connected to the rack-and-pinion body itself and adapted to move the filling frame 15 on the guidance assembly 25.

Conveniently, the guidance assembly 25 coincides with the guidance unit 23 and the axis of sliding A2 coincides with the axis of travel A1.

In other words, the filling frame 15 and the gripping frame 8 are arranged one on top of the other, mounted on the same rails and movable along the same axis as the supporting means 3.

The equipment 1 also comprises an electronic control system 26 provided with at least one electronic unit 26a configured to operate at least one of either the supporting means 3, the gripping means 6, the filling means 7, the mutual movement unit 20 or the mutual movement assembly 21.

The electronic control system 26 also comprises at least one position sensor 26b operationally connected to the electronic unit 26a and configured to determine at least one position of at least one of either the connecting element 13, the gripping frame 8 or the filling frame 15.

The operation of the equipment 1 according to the invention is as follows.

Initially, the first container element 51 is positioned in the loading station where the cheese C is arranged into the first housing 51a.

The first container element 51 is then transferred by means of the supporting plane 4, along the direction of forward movement D, towards the filling station. At this point, the mutual movement unit 20 moves the gripping means 6 towards the supporting means 3.

In particular, the driving unit 22 brings the diaphragm device 9 closer to the cheese C so that the latter can transit through the passage hole 10.

The actuating body 14 of the rotational means 12 is operated by determining the rotation of the gripping elements 11 towards the working position, partly closing the passage hole 10 and retaining the portion P.

The mutual movement unit 20 moves the gripping means 6 so as to lift the cheese C from the first container element 51.

The mutual movement assembly 21 moves the filling means 7 towards the gripping means 6.

In particular, the motor assembly 24 brings the injector device 16 closer to the diaphragm device 9 so as to allow the injector device itself to be inserted into the cheese C through the portion P.

The pumping device 18 is operated to allow the stuffing to be delivered.

During this phase, the mutual movement unit 20 and the mutual movement assembly 21 move the gripping means 6 and the filling means 7 away at the same time from the supporting means 3, respectively, in order to facilitate the deformation of the cheese C.

Meanwhile, the supporting plane 4 moves forward along the direction of forward movement D so as to bring the second container element 52 to the receiving station.

At the end of the delivery, the mutual movement assembly 21 moves the filling means 7 away from the gripping means 6 to allow the injector device 16 to be pulled out of the portion P.

The mutual movement unit 20 brings the gripping means 6 closer to the supporting means 3 to rest the stuffed cheese S into the second housing 52a.

More in detail, as shown in Figures 4 to 8, the gripping means 6 are adapted to completely lift the cheese C from the first container element 51, prior to filling, so as to allow an effective increase in volume of the stuffed cheese S and then to rest the latter in the second container element 52 at the end of filling.

It cannot, however, be ruled out that, depending on special production requirements, e.g. in the case of particular types of stuffing which could cause an excessive weight increase in the stuffed cheese S, the gripping means 6 are adapted to lift the cheese C only partly, so that during filling the weight of the stuffed cheese S is discharged onto the first container element 51. In this case, the gripping means 6 ensure that the stuffed cheese S is fully lifted only at the end of filling, and only then the supporting plane 4 moves forward so as to bring the second container element 52 to the receiving station.

At this point, the gripping elements 11 are moved towards the sealing position to apply pressure on the portion P and close the stuffed cheese S.

If necessary, the gripping elements 11 are further rotated towards the cutting position to remove the portion P from the stuffed cheese S.

Then, the gripping elements 11 are brought to the home position to release the stuffed cheese S, and, if necessary, the removed portion P, onto the supporting means 3.

The supporting plane 4 displaces the second container element 52 containing the stuffed cheese S and, if necessary, the removed portion P, towards the unloading station where they are transferred to the respective tubs 19a and 19b.

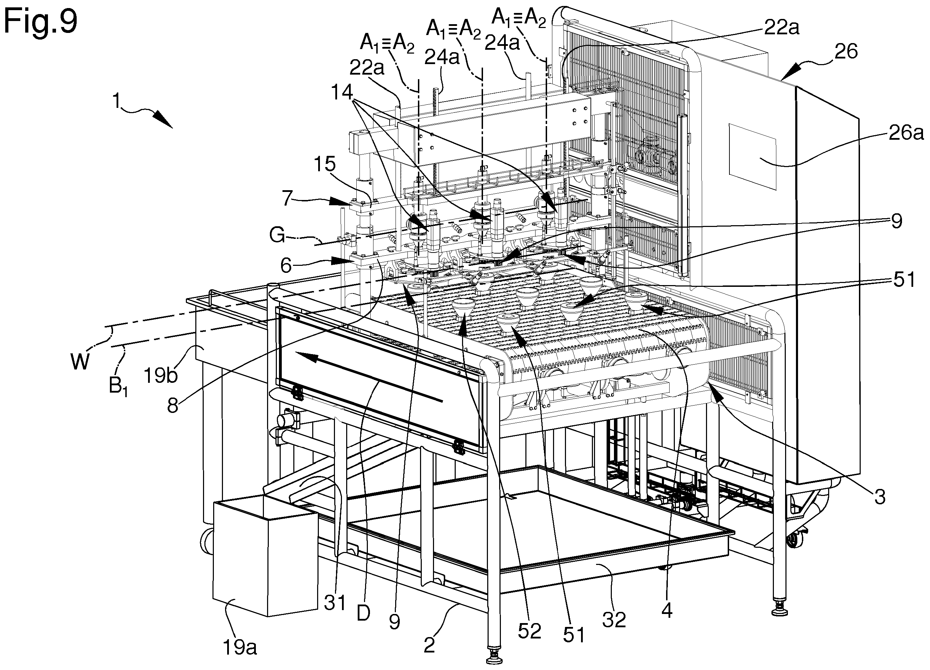

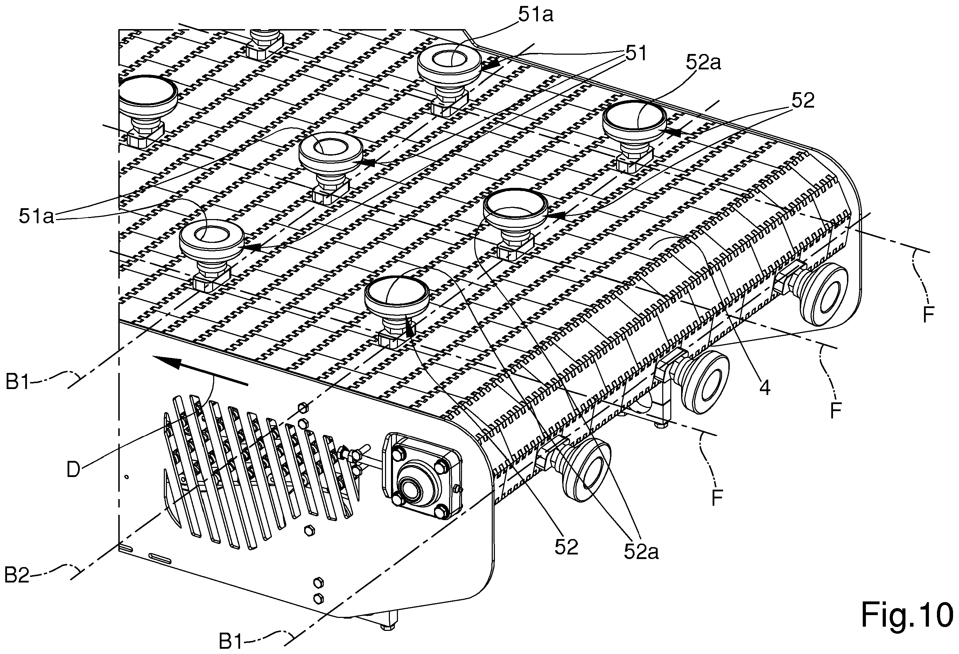

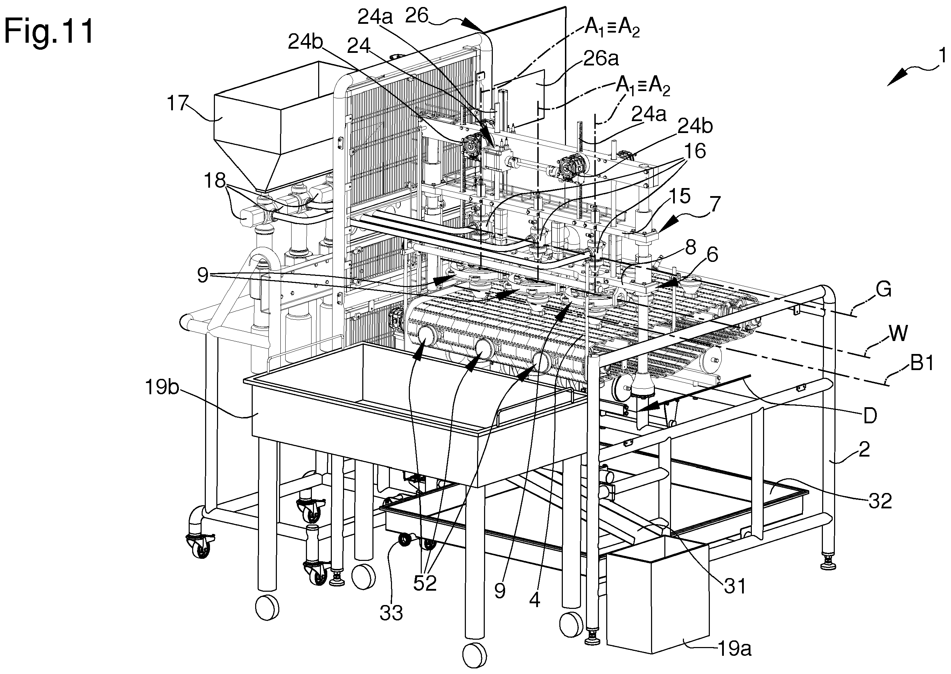

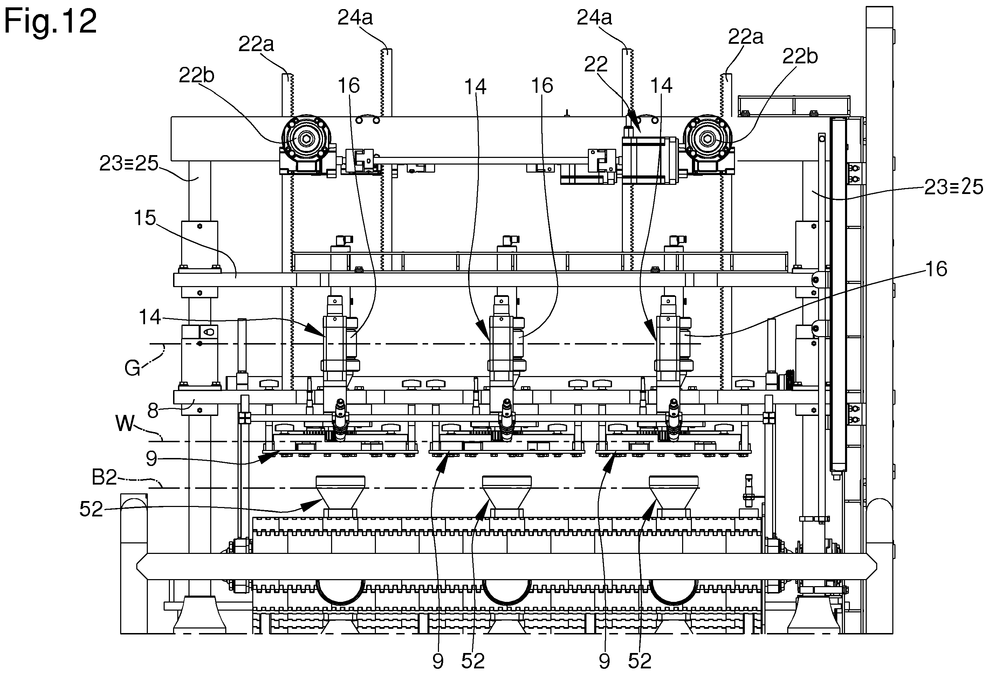

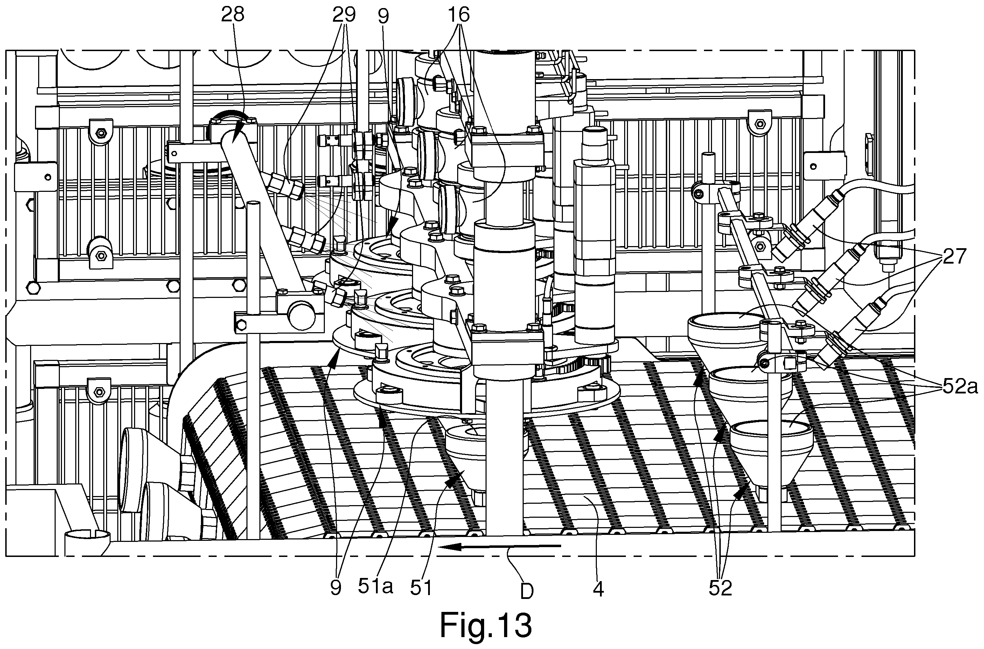

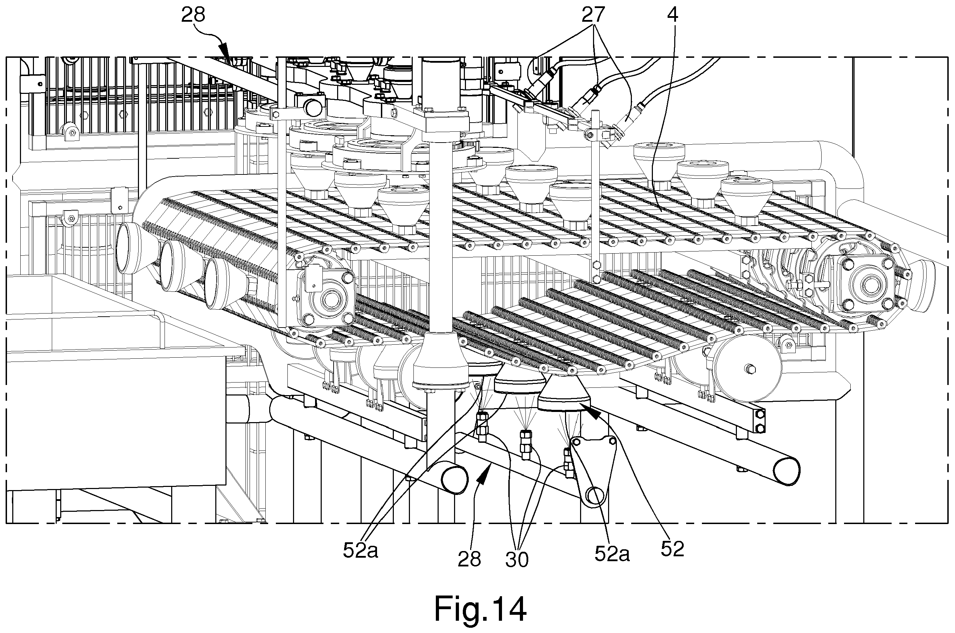

According to a second embodiment, shown in Figures 9 to 14, the gripping means 6 comprise a plurality of diaphragm devices 9 associated with the gripping frame 8 and arranged side by side along at least one working direction W transverse to the direction of forward movement D.

Preferably, the working direction W is substantially orthogonal to the direction of forward movement D.

Alternative embodiments cannot however be ruled out wherein the working direction is substantially oblique to the direction of forward movement and/or wherein the diaphragm devices 9 are arranged along several working directions W in a staggered manner.

Each of the diaphragm devices 9 is adapted to retain a respective cheese C.

Such an embodiment appropriately provides that the supporting means 3 comprise a plurality of rows of container elements F, wherein the first container elements 51 are arranged side by side along relevant first positioning directions B1 substantially parallel to the working direction W and the second container elements 52 are arranged side by side along relevant second positioning directions B2 substantially parallel to the first positioning directions B1.

The number of the rows of container elements F corresponds to the number of diaphragm devices 9.

In more detail, the rows of container elements F are arranged substantially parallel to each other and parallel to the direction of forward movement D.

The positioning directions B1, B2 are substantially orthogonal to the direction of forward movement D.

The container elements 51, 52 are therefore arranged so that when the first container element 51 of one of the rows of container elements F is in the loading station, the other rows of container elements F also have a first container element 51 in the same station.

The same considerations can be made for all stations and also for the second container element 52.

The equipment 1 according to the second embodiment allows, therefore, simultaneously working a plurality of cheeses C.

Conveniently, each diaphragm device 9 comprises a respective actuating body 14.

The diaphragm devices 9 can, therefore, be operated independently of each other to retain/release the cheese C.

In this way, only the diaphragm devices 9 actually required can be operated.

In addition, it is possible to provide that in some diaphragm devices 9 the gripping elements 11 are moved between the home position and the sealing position, while in other diaphragm devices 9 the gripping elements 11 are moved between the home position and the cutting position, in order to obtain stuffed cheese S provided with the portion P and without the portion P, respectively.

Again with reference to this second embodiment, the filling means 7 comprise a plurality of injector devices 16 connected in a fluid-operated manner to the tank 17, which filling means are associated with the filling frame 15 and arranged side by side along at least one operating direction G transverse to the direction of forward movement D.

Preferably, the operating direction G is substantially orthogonal to the direction of forward movement D.

Advantageously, the operating direction G is substantially parallel to the working direction W.

Even more preferably, the operating direction G and the working direction W extend substantially horizontally and rest one on top of the other on the same substantially vertical plane.

Appropriately, each diaphragm device 9 corresponds to an injector device 16. Each of the injector devices 16 is adapted to inject the stuffing into a respective cheese C.

Each injector device 16 is conveniently connected to a respective pumping device 18.

The injector devices 16 can therefore be operated independently of each other to deliver the stuffing.

This way, each injector device 16 delivers the stuffing only if actually needed, i.e. if the corresponding diaphragm device 9 has closed to retain the cheese C.

In addition, it is possible to provide for the injector devices 16 to deliver different quantities of stuffing in order to obtain stuffed cheese S of different types.

The equipment 1 according to the second embodiment allows, therefore, both the processing of several cheeses C at the same time and the production of stuffed cheese S of different types.

In particular, the solution of providing the diaphragm devices 9 associated with an individual gripping frame 8 and the injector devices 16 associated with an individual filling frame 15 allows them to be moved simultaneously by means of the driving unit 22 and the motor assembly 24, respectively.

This solution allows reducing the number of components and movable parts, making the equipment 1 extremely compact and provided with an agile operation.

As shown in Figures 9 to 14, the equipment 1 also comprises at least one presence sensor 27 configured to detect the presence of the cheese C inside the first container element 51.

In more detail, the presence sensor 27 is configured to detect the presence of the cheese C with the first container element 51 positioned in a detection station, between the loading station and the filling station.

The presence sensor 27 is of the type, e.g., of a diffuse reflection photocell.

The injector device 16 is interlocked to the presence sensor 27 to deliver the stuffing only in the presence of the cheese C in the first container element 51.

In particular, the equipment 1 comprises a presence sensor 27 for each injector device 16.

The presence sensors 27 are operationally connected to the electronic unit 26a.

If the presence sensor 27 detects the presence of the cheese C in the first housing 51a, the electronic unit 26a is programmed to operate the pumping device 18 of the corresponding injector device 16.

If, on the other hand, the presence sensor 27 does not detect the presence of the cheese C, the pumping device 18 of the corresponding injector device 16 is not operated so as not to deliver the stuffing.

It cannot be ruled out that the presence sensor 27 can also be applied to the equipment 1 in accordance with the first embodiment shown in Figures 1 to 8.

Always with reference to Figures 9 to 14, the equipment 1 comprises cleaning means 28 associated with the base frame 2 and adapted to deliver at least one cleaning fluid to at least the gripping means 6.

The cleaning fluid is of the type, e.g., of hot water and/or a sanitizing product.

More specifically, the cleaning means 28 comprise at least one delivering element 29 configured to direct a jet of cleaning fluid towards the diaphragm device 9.

The delivering element 29 has the function of removing any residual cheese C and/or stuffing that remains on the diaphragm device 9 as a result of the preparation of the stuffed cheese S.

The cleaning means 28 comprise at least one delivering element 29 for each diaphragm device 9.

The cleaning means 28 also comprise a dispensing element 30 configured to direct the jet of cleaning fluid towards the container elements 51, 52.

In more detail, the dispensing element 30 delivers the cleaning fluid towards the housings 51a, 52a.

The dispensing element 30 has the function of cleaning the housings 51a, 52a after unloading the stuffed cheese S and before positioning a new cheese C.

In detail, the movement of the supporting plane 4 allows positioning the container elements 51, 52 in a cleaning station wherein they are cleaned before starting a new processing cycle.

The dispensing element 30 is associated with the base frame 2 below the supporting plane 4.

Specifically, in the cleaning station, the container elements 51, 52 are arranged with their relevant housings 51a, 52a facing downwards and the dispensing element 30 delivers the cleaning fluid upwards.

This way, after that the housings 51a, 52a have been cleaned, the cleaning fluid flows downwards by gravity.

The operation, therefore, does not require for an additional phase of emptying the container elements 51, 52 from the cleaning fluid to start a new processing cycle.

The cleaning means 28 comprise a dispensing element 30 for each row of container elements 5.

The cleaning means 28, therefore, allow the cleaning of the diaphragm devices 9 and of the container elements 51, 52 at each processing cycle.

It cannot be ruled out that the cleaning means 28 may also be applied to the equipment 1 according to the first embodiment shown in Figures 1 to 8.

For the collection and recovery of the cleaning fluid delivered by the cleaning means 28, the equipment 1 comprises a collection tank 32 located below the supporting plane 4, conveniently below the cleaning station.

Clearly, any stuffing that has not been correctly injected into the cheeses C by the injector devices 16 is also collected in the collection tank 32.

All products collected in the collection tank 32 can be drained therefrom (e.g. by suction through a union 33) to be possibly recovered and/or to be definitively discarded.

In the second embodiment, moreover, the separation of the stuffed cheese S and of the portions P is carried out using an alternative method to that described above.

In more detail, as shown in the figures, the second tub 19b, intended to contain the stuffed cheese S is arranged along the direction of forward movement D at the supporting plane 4 and receives the stuffed cheese S when the supporting plane itself moves forward.

The first tub 19a, intended to contain the portions P, on the other hand, is placed laterally to the supporting plane 4, at the base of the equipment 1. By means of a slide 31, placed below the supporting plane 4, the portions P are conveyed by gravity (and possibly pushed by means of a jet of water) from the supporting plane 4 to the first tub 19a as the supporting plane 4 moves forward. To facilitate the descent of the portions P along the slide 31, a nozzle can be conveniently provided which is adapted to deliver a jet of water along the slide 31.

In a possible alternative embodiment, the equipment 1 comprises an additional conveyor belt positioned below the supporting plane 4, adapted to receive the portions P following their fall from the supporting plane 4 and to carry them towards the first tub 19a.

It has in practice been ascertained that the described invention achieves the intended objects and in particular it is underlined that the equipment for the production of stuffed cheese, particularly burrata cheese, allows reducing the processing time and costs related thereto.

The presence of a plurality of diaphragm devices and injector devices makes it possible to further reduce processing times and at the same time to produce stuffed cheese of different types.

Moreover, the equipment according to the invention allows the production of stuffed cheese, particularly burrata cheese, in a totally automated manner in order to avoid the use of skilled labor.

It follows, furthermore, that the equipment according to the invention allows producing stuffed cheese quickly and minimizing the risk of bacterial contamination.

## Claims

1. Equipment (1) for the production of stuffed cheese, particularly burrata cheese, comprising:
- at least one base frame (2);
- supporting means (3) of at least one cheese (C) of the fresh "pasta filata" type associated with said base frame (2);
- gripping means (6) of said cheese (C) associated with said base frame (2) and adapted to retain at least one portion (P) of said cheese (C);
- filling means (7) of said cheese (C) associated with said base frame (2) and adapted to inject a stuffing inside said cheese (C) through said portion (P) to obtain a stuffed cheese (S);
- at least one mutual movement unit (20) between said supporting means (3) and said gripping means (6); and
- at least one mutual movement assembly (21) between said gripping means (6) and said filling means (7);
**characterized in that** said supporting means (3) comprise at least a first container element (51) defining a first housing (51a) adapted to contain said cheese (C) and at least a second container element (52) defining a second housing (52a) adapted to contain said stuffed cheese (S), wherein said housings (51a, 52a) have a relative radius of curvature, the radius of curvature of said second housing (52a) being greater than the radius of curvature of said first housing (51a).

2. Equipment (1) according to claim 1, **characterized by** the fact that said supporting means (3) comprise a supporting plane (4) of said container elements (51, 52) movable on said base frame (2) along a direction of forward movement (D).

3. Equipment (1) according to claim 2, **characterized by** the fact that said supporting plane (4) is movable along said direction of forward movement (D) to position said container elements (51, 52) between:
- a loading station, wherein said first container element (51) receives said cheese (C);
- a stuffing station, wherein said first container element (51) is arranged at the point where said gripping means (6) are located and said gripping means (6) retain said portion (P);
- a receiving station, wherein said second container element (52) is arranged at the point where said gripping means (6) are located and said gripping means (6) release said stuffed cheese (S) into said second container element (52); and
- an unloading station, wherein said second container element (52) releases said stuffed cheese (S).

4. Equipment (1) according to claim 2, **characterized by** the fact that said supporting means (3) comprise at least one row of container elements (F) comprising a plurality of said first container elements (51) and a plurality of said second container elements (52) associated with said supporting plane (4) and arranged alternately in sequence along said direction of forward movement (D).

5. Equipment (1) according to one or more of the preceding claims, **characterized by** the fact that said gripping means (6) comprise at least one gripping frame (8) associated with said base frame (2) and at least one diaphragm device (9) associated with said gripping frame (8) and closable around said cheese (C) to retain said portion (P) and openable to release said stuffed cheese (S).

6. Equipment (1) according to claim 5, **characterized by** the fact that said diaphragm device (9) comprises:
- a plurality of gripping elements (11) associated with said gripping frame (8), arranged along a circumference and mutually movable in rotation around respective axes of rotation (R) between at least one working position, wherein they are approached to the center of said circumference to intercept said cheese (C) and retain said portion (P), and a home position, wherein they are moved away from said center to release said stuffed cheese (S); and
- rotational means (12) for the rotation of said gripping elements (11) between at least said working position and said home position, comprising at least one connecting element (13) associated with said gripping elements (11) and at least one actuating body (14) operatively connected to said connecting element (13) by means of a gear wheel (14a) adapted to mesh on a respective toothed portion (13b) defined on said connecting element (13), the rotation of said gear wheel (14a) in the two ways of rotation thus causing the movement of said gripping elements (11) between said working position and said home position.

7. Equipment (1) according to claim 6, **characterized by** the fact that said gripping means (6) comprise a plurality of said diaphragm devices (9) associated with said gripping frame (8) arranged side by side along at least one direction of work (W) transverse to said direction of forward movement (D), each adapted to retain a respective cheese (C).

8. Equipment (1) according to claim 7, **characterized by** the fact that said supporting means (3) comprise a plurality of said rows of container elements (F), wherein said first container elements (51) are arranged side by side along relevant first positioning directions (B1) substantially parallel to said direction of work (W) and said second container elements (52) are arranged side by side along relevant second positioning directions (B2) substantially parallel to said first positioning directions (B1), the number of said rows of container elements (F) corresponding to the number of said diaphragm devices (9).

9. Equipment (1) according to one or more of the preceding claims, **characterized by** the fact that said filling means (7) comprise:
- at least one filling frame (15) associated with said base frame (2);
- at least one injector device (16) associated with said filling frame (15) and adapted to inject said stuffing into said cheese (C); and
- at least one tank (17) adapted to contain said stuffing, connected in a fluid-operated manner to said injector device (16).

10. Equipment (1) according to claim 9, **characterized by** the fact that said filling means (7) comprise a plurality of said injector devices (16) connected in a fluid-operated manner to said tank (17), associated with said filling frame (15) and arranged side by side along at least one operating direction (G) transverse to said direction of forward movement (D), each adapted to inject said stuffing into a respective cheese (C).

## Patentansprüche

1. Vorrichtung (1) zur Herstellung von gefülltem Käse, insbesondere von Burrata-Käse, bestehend aus:
- mindestens einen Grundrahmen (2);
- Stützmittel (3) für mindestens einen Käse (C) des frischen "Pasta-Filata" [alternativ: Spinn- oder Ziehkäse]-Typs, die mit dem Grundrahmen (2) verbunden sind;
- Greifmittel (6) für den Käse (C), die mit dem Grundrahmen (2) verbunden und ausgebildet sind, mindestens einen Teil (P) des Käses (C) festzuhalten;
- Füllmittel (7) für den Käse (C), die mit dem Grundrahmen (2) verbunden und ausgebildet sind, durch den Teil (P) eine Füllung in den Käse (C) zu spritzen, um einen gefüllten Käse (S) zu erhalten;
- mindestens eine Einheit (20) für eine gegenseitige Bewegung zwischen den Stützmitteln (3) und den Greifmitteln (6); und
- mindestens eine Anordnung (21) für eine gegenseitige Bewegung zwischen den Greifmitteln (6) und den Füllmitteln (7);
**dadurch gekennzeichnet, dass**
die Stützmittel (3) mindestens ein erstes Behälterelement (51), das ein erstes Gehäuse (51a) definiert, das ausgebildet ist, den Käse (C) aufzunehmen, und mindestens ein zweites Behälterelement (52) umfassen, das ein zweites Gehäuse (52a) definiert, das ausgebildet ist, den gefüllten Käse (S) aufzunehmen, wobei die Gehäuse (51a, 52a) einen relativen Krümmungsradius aufweisen, wobei der Krümmungsradius des zweiten Gehäuses (52a) größer ist als der Krümmungsradius des ersten Gehäuses (51a).

2. Vorrichtung (1) gemäß Anspruch 1, **dadurch gekennzeichnet, dass** die Stützmittel (3) eine Stützebene (4) für die Behälterelemente (51, 52) umfassen, die auf dem Grundrahmen (2) entlang einer Vorwärtsbewegungsrichtung (D) beweglich ist.

3. Vorrichtung (1) gemäß Anspruch 2, **dadurch gekennzeichnet, dass** die Stützebene (4) entlang der Vorwärtsbewegungsrichtung (D) beweglich ist, um die Behälterelemente (51, 52) zwischen
- einer Beladungsstation, an der das erste Behälterelement (51) den Käse (C) aufnimmt,
- einer Füllstation, an der das erste Behälterelement (51) an dem Punkt angeordnet ist, an dem sich die Greifmittel (6) befinden und die Greifmittel (6) den Teil (P) festhalten
- einer Aufnahmestation, an der das zweite Behälterelement (52) an dem Punkt angeordnet ist, an dem sich die Greifmittel (6) befinden und die Greifmittel (6) den gefüllten Käse (S) in das zweite Behälterelement (52) freigeben; und
- eine Entladestation, an der das zweite Behälterelement (52) den gefüllten Käse (S) freigibt.

4. Vorrichtung (1) gemäß Anspruch 2, **dadurch gekennzeichnet, dass** die Stützmittel (3) mindestens eine Reihe von Behälterelementen (F) umfassen, die eine Vielzahl der ersten Behälterelemente (51) und eine Vielzahl der zweiten Behälterelemente (52) umfassen, die mit der Stützebene (4) verbunden sind und in einer abwechselnden Reihenfolge entlang der Vorwärtsbewegungsrichtung (D) angeordnet sind.

5. Vorrichtung (1) gemäß einem oder mehreren der vorhergehenden Ansprüche, **dadurch gekennzeichnet, dass** die Greifmittel (6) mindestens einen Greifrahmen (8), der mit dem Grundrahmen (2) verbunden ist, und mindestens eine Membranvorrichtung (9) umfasst, die mit dem Greifrahmen (8) verbunden ist und um den Käse (C) herum geschlossen werden kann, um den Teil (P) festzuhalten, und geöffnet werden kann, um den gefüllten Käse (S) freizugeben.

6. Vorrichtung (1) gemäß Anspruch 5, **dadurch gekennzeichnet, dass** die Membranvorrichtung (9) umfasst:
- eine Vielzahl von Greifelementen (11), die mit dem Greifrahmen (8) verbunden sind, entlang eines Umfangs angeordnet sind und in Bezug dazu um entsprechende Drehachsen (R) zwischen mindestens einer Arbeitsposition, in der sie dem Zentrum des Umfangs angenähert sind, um den Käse (C) zu erfassen und den Teil (P) festzuhalten, und einer Ausgangsposition beweglich sind, in der sie von dem Zentrum wegbewegt sind, um den gefüllten Käse (S) freizugeben; und
- Drehmittel (12) zum Drehen der Greifelemente (11) zwischen der mindestens einen Arbeitsposition und der Ausgangsposition, die mindestens ein Verbindungselement (13), das mit den Greifelementen (11) verbunden ist, und mindestens einem Betätigungskörper (14) umfassen, der mit dem Verbindungselement (13) über ein Zahnrad (14a) wirkverbunden ist, das ausgebildet ist, in einen entsprechenden gezahnten Abschnitt (13b) einzugreifen, der auf dem Verbindungselement (13) ausgebildet ist, wobei die Drehung des Zahnrads (14a) in den beiden Drehrichtungen somit die Bewegung der Greifelemente (11) zwischen der Arbeitsposition und der Ausgangsposition bewirkt.

7. Vorrichtung (1) gemäß Anspruch 6, **dadurch gekennzeichnet, dass** die Greifmittel (6) eine Vielzahl von Membranvorrichtungen (9) umfassen, die mit dem Greifrahmen (8) verbunden sind und entlang mindestens einer Arbeitsrichtung (W) quer zu der Vorwärtsbewegungsrichtung (D) nebeneinander angeordnet sind, wobei jede ausgebildet ist, einen entsprechenden Käse (C) festzuhalten.

8. Vorrichtung (1) gemäß Anspruch 7, **dadurch gekennzeichnet, dass** die Stützmittel (3) eine Vielzahl der Reihen von Behälterelementen (F) umfassen, wobei die ersten Behälterelemente (51) nebeneinander entlang relevanter erster Positionierungsrichtungen (B1) im Wesentlichen parallel zu der Arbeitsrichtung (W) angeordnet sind und die zweiten Behälterelemente (52) nebeneinander entlang relevanter zweiter Positionierungsrichtungen (B2) im Wesentlichen parallel zu den ersten Positionierungsrichtungen (B1) angeordnet sind, wobei die Anzahl der Reihen von Behälterelementen (F) der Anzahl der Membranvorrichtungen (9) entspricht.

9. Vorrichtung (1) gemäß einem oder mehreren der vorhergehenden Ansprüche, **dadurch gekennzeichnet, dass** die Füllmittel (7) umfassen:
- mindestens einen Füllrahmen (15), der mit dem Grundrahmen (2) verbunden ist;
- mindestens eine Einspritzvorrichtung (16), die mit dem Füllrahmen (15) verbunden und ausgebildet ist, die Füllung in den Käse (C) einzuspritzen; und
- mindestens einen Tank (17), der ausgebildet ist, die Füllung aufzunehmen, der in einer fluidbetriebenen Weise mit der Einspritzvorrichtung (16) verbunden ist.

10. Vorrichtung (1) nach Anspruch 9, **dadurch gekennzeichnet, dass** die Füllmittel (7) eine Vielzahl von Einspritzvorrichtungen (16) umfassen, die in fluidbetriebener Weise mit dem Tank (17) verbunden sind, mit dem Füllrahmen (15) verbunden sind und entlang mindestens einer Betriebsrichtung (G) quer zu der Vorwärtsbewegungsrichtung (D) nebeneinander angeordnet sind, wobei jede ausgebildet ist, die Füllung in einen entsprechenden Käse (C) einzuspritzen.

## Revendications

1. - Équipement (1) pour la production de fromage farci, en particulier de fromage burrata, comprenant :
- au moins un châssis de base (2) ;
- des moyens de support (3) d'au moins un fromage (C) du type à pâte filée fraîche, associés audit châssis de base (2) ;
- des moyens de préhension (6) dudit fromage (C) associés audit châssis de base (2) et agencés pour retenir au moins une partie (P) dudit fromage (C) ;
- des moyens de remplissage (7) dudit fromage (C) associés audit châssis de base (2) et agencés pour injecter une farce à l'intérieur dudit fromage (C) à travers ladite partie (P) pour obtenir un fromage farci (S) ;
- au moins une unité de mouvement mutuel (20) entre lesdits moyens de support (3) et lesdits moyens de préhension (6) ; et
- au moins un ensemble de mouvement mutuel (21) entre lesdits moyens de préhension (6) et lesdits moyens de remplissage (7) ;
**caractérisé par le fait que** lesdits moyens de support (3) comprennent au moins un premier élément récipient (51) définissant un premier logement (51a) agencé pour contenir ledit fromage (C) et au moins un second élément récipient (52) définissant un second logement (52a) agencé pour contenir ledit fromage farci (S), lesdits logements (51a, 52a) ayant un rayon de courbure respectif, le rayon de courbure dudit second logement (52a) étant supérieur au rayon de courbure dudit premier logement (51a).

2. - Équipement (1) selon la revendication 1, **caractérisé par le fait que** lesdits moyens de support (3) comprennent un plan de support (4) desdits éléments récipients (51, 52), mobile sur ledit châssis de base (2) le long d'une direction d'avance (D).

3. - Équipement (1) selon la revendication 2, **caractérisé par le fait que** ledit plan de support (4) est mobile le long de ladite direction d'avance (D) pour positionner lesdits éléments récipients (51, 52) entre :
- un poste de chargement, dans lequel ledit premier élément récipient (51) reçoit ledit fromage (C) ;
- un poste de farcissure, dans lequel le premier élément récipient (51) est disposé à l'emplacement où lesdits moyens de préhension (6) sont situés et où lesdits moyens de préhension (6) retiennent ladite partie (P) ;
- un poste de réception, dans lequel ledit second élément récipient (52) est disposé à l'emplacement où lesdits moyens de préhension (6) sont situés et où lesdits moyens de préhension (6) libèrent ledit fromage farci (S) dans ledit second élément récipient (52) ; et
- un poste de déchargement, dans lequel ledit second élément du contenant (52) libère ledit fromage farci (S).

4. - Équipement (1) selon la revendication 2, **caractérisé par le fait que** lesdits moyens de support (3) comprennent au moins une rangée d'éléments récipients (F) comprenant une pluralité desdits premiers éléments récipients (51) et une pluralité desdits seconds éléments récipients (52) associés audit plan de support (4) et disposés de manière alternée en séquence le long de ladite direction d'avance (D).

5. - Équipement (1) selon une ou plusieurs des revendications précédentes, **caractérisé par le fait que** lesdits moyens de préhension (6) comprennent au moins un châssis de préhension (8) associé audit châssis de base (2) et au moins un dispositif de diaphragme (9) associé audit châssis de préhension (8) et apte à être fermé autour dudit fromage (C) pour retenir ladite partie (P) et apte à être ouvert pour libérer ledit fromage farci (S).

6. - Équipement (1) selon la revendication 5, **caractérisé par le fait que** ledit dispositif de diaphragme (9) comprend :
- une pluralité d'éléments de préhension (11) associés audit châssis de préhension (8), disposés le long d'une circonférence et mutuellement mobiles en rotation autour d'axes de rotation (R) respectifs entre au moins une position de travail, dans laquelle ils sont rapprochés du centre de ladite circonférence pour intercepter ledit fromage (C) et retenir ladite partie (P), et une position de repos, dans laquelle ils sont écartés dudit centre pour libérer ledit fromage farci (S) ; et
- des moyens de rotation (12) pour la rotation desdits éléments de préhension (11) entre au moins ladite position de travail et ladite position de repos, comprenant au moins un élément de liaison (13) associé auxdits éléments de préhension (11) et au moins un corps d'actionnement (14) relié de manière fonctionnelle audit élément de liaison (13) au moyen d'une roue dentée (14a) agencée pour s'engrener sur une partie dentée (13b) respective définie sur ledit élément de liaison (13), la rotation de ladite roue dentée (14a) dans les deux sens de rotation provoquant ainsi le mouvement desdits éléments de préhension (11) entre ladite position de travail et ladite position de repos.

7. - Équipement (1) selon la revendication 6, **caractérisé par le fait que** lesdits moyens de préhension (6) comprennent une pluralité desdits dispositifs de diaphragme (9), associés audit châssis de préhension (8), disposés côte à côte le long d'au moins une direction de travail (W) transversale à ladite direction d'avance (D), chacun agencé pour retenir un fromage (C) respectif.

8. - Équipement (1) selon la revendication 7, **caractérisé par le fait que** lesdits moyens de support (3) comprennent une pluralité desdites rangées d'éléments récipients (F), lesdits premiers éléments récipients (51) étant disposés côte à côte le long de premières directions de positionnement (B1) appropriées sensiblement parallèles à ladite direction de travail (W), et lesdits seconds éléments récipients (52) étant disposés côte à côte le long de secondes directions de positionnement (B2) appropriées sensiblement parallèles aux premières directions de positionnement (B1), le nombre desdites rangées d'éléments récipients (F) correspondant au nombre desdits dispositifs de diaphragme (9).

9. - Équipement (1) selon une ou plusieurs des revendications précédentes, **caractérisé par le fait que** lesdits moyens de remplissage (7) comprennent :
- au moins un châssis de remplissage (15) associé audit châssis de base (2) ;
- au moins un dispositif injecteur (16) associé audit châssis de remplissage (15) et agencé pour injecter ladite farce dans ledit fromage (C) ; et
- au moins un réservoir (17) agencé pour contenir ladite farce, relié de manière fluidique audit dispositif injecteur (16).

10. - Équipement (1) selon la revendication 9, **caractérisé par le fait que** lesdits moyens de remplissage (7) comprennent une pluralité desdits dispositifs injecteurs (16) reliés de manière fluidique audit réservoir (17), associés audit châssis de remplissage (15) et disposés côte à côte le long d'au moins une direction de fonctionnement (G) transversale à ladite direction d'avance (D), chacun agencé pour injecter ladite farce dans un fromage (C) respectif.
